# EUROPEAN PATENT SPECIFICATION

(11) **EP 2 641 831 B1**
(45) Date of publication and mention of the grant of the patent: **24.12.2014**
(21) Application number: 12400007.6
(22) Date of filing: 22.03.2012
(51) Int. Cl.: B64C 25/52

(54) **Helicopter skid type landing gear**
Hubschrauberfahrwerk mit Kufen
Atterrisseur à patins pour un giravion

(43) Date of publication of application: 25.09.2013
(73) Proprietor: AIRBUS HELICOPTERS DEUTSCHLAND GmbH, 86609 Donauwörth (DE)
(72) Inventor: Engleder, Alexander, 86609 Donauwörth (DE); Görlich, Stefan, 86609 Donauwörth (DE)
(74) Representative: GPI & Associés

(56) References cited:
- US-A- 3 144 223
- US-A- 4 519 559
- US-A- 5 224 669
- US-A1- 2011 133 378

## Description

The invention is related to a helicopter with a skid type landing gear and to a skid type landing gear.

Landing gears of helicopters have to be designed to allow absorption of the vertical energy of a landing, by elastic deformation during regular landings and by plastic deformation during hard landings. For example: for one helicopter type with a classical skid type landing gear with a forward and an aft cross tube the respective plastic deformations can reach a value up to 360 mm in vertical direction at the aft cross tube and up to 460 mm at the forward cross tube.

A landing gear of a helicopter can contribute to the so called ground resonance phenomenon. Especially the stiffness and the damping properties of the landing gear influence the ground resonance. Ground resonance is a hazardous condition that can occur any time the rotor of a helicopter or gyroplane is turning while the aircraft is on the ground.

Ground resonance can occur when
- the spacing between blades of a rotorcraft becomes irregular or
- the damping system, lead lag damping on the rotor as well as damping of the fuselage and the landing gear, are operating out of limits.

Two physical properties are of particular importance for skid type landing gear assemblies: the vertical and the longitudinal stiffness. The terms "vertical stiffness" or "longitudinal stiffness", as used herein, refer exclusively to the linear or elastic portion of the load vs. stroke curves, because it is in the linear or elastic portion of said curves, in which skid gears function during normal helicopter operation. The vertical stiffness is important to attenuate landing energy. The longitudinal stiffness is important because it is a primary source of frequency response to ground resonance frequency. The damping behaviour of a skid landing gear with two skid tubes and two cross tubes is influenced by:
- Friction of the skid tubes on the ground, because any vertical movement as consequence of the vertical stiffness will have a lateral movement of the skid as a result.
- Friction between the single parts of the landing gear assembly at bolted joints and/or riveted joints.
- Hysteresis of any elastomeric components in the landing gear assembly or at landing gear attachment points.

There are three common ways of counteracting the phenomenon of ground resonance, either: 1. to change the damping of the fuselage or 2. to change the damping of the rotor or 3. to change the characteristics of the landing gear.

The most economical way to solve the ground resonance problem is to change the stiffness and damping behaviour of the skid type landing gear so that no ground resonance occurs. This can be done by adding some diagonal struts in between the components of skid type landing gears at the cost of weight and drag. A specific cross section form and material of cross tube members can influence the stiffness. This is the practicable way but not the most elegant. Sometimes a damping element is added to a cross tube, if the deflection of the tube allows effective damping at a certain point.

The document US 5224669 A (Guimbal) discloses the use of dampers to control resonance.

The document US 4196878 A (Aerospatiale) discloses a landing gear for rotary-wing aircraft having two main skids connected to the aircraft structure by two cantilevered arcuate supports. Each skid has at least one flexible element capable of flexing resiliently upon contacting the ground.

The document US 4270711 A discloses a helicopter landing gear assembly which includes a pair of cross tubes having a pair of struts connected at the outboard ends thereof.

The documents US 2010/0237190 A and US 2007/0181744 A (Eurocopter) disclose undercarriages having anticrash and antiresonance skids for a rotary wing aircraft.

The document US 6427942 A (Bell) discloses a skid landing gear for a helicopter, in which the directional stiffness of the cross members of the skid landing gear have been de-coupled from one another, such that the longitudinal stiffness of the cross members may be independent of the vertical stiffness and fatigue life of the cross members. In order to de-couple the stiffness in the skid type landing gear, two approaches are employed. In the first approach, the skid landing gear has non-symmetric-section cross members and/or distribution of different materials within the cross section for de-coupling the vertical stiffness of the cross members from the longitudinal stiffness. In the second approach, mounting devices are employed that provide compliance in selected directions, thereby de-coupling the directional stiffness.

The document US 2011/0133378 A (Nanokas Aviation) discloses a landing gear damper which allows for appropriate ground resonance performance, while reducing the needs for maintenance and enhancing performances with a combined spring and damper element with disc springs inside the damper cylinder. The disadvantage is that the combination of both leads to high spot forces in case of a crash landing. Even moderate hard landings may deform the cross tubes to a certain extent. Said cross tubes consequently need to be exchanged regularly, thus causing customer dissatisfaction. Cross tubes of skid type landing gears on helicopters of the state of the art operating on ships need to be replaced quite often as they reach soon their limits in setting. The designs of skid type landing gears of the state of the art require experience/analysis and trial and error to find the correct stiffness and damping to avoid ground resonance under all possible landing attitudes.

The document US 4519559 A (Logan) discloses a landing gear of the undercarriage of a helicopter with skids connected to upwardly extending cross tubes pivotally connected to an airframe structure. Dampers have a first end pivotally connected to said cross tubes and a second end pivotally connected to the airframe structure. Hydraulic cylinders in the respective dampers are interconnected through hydraulic restoring devices. Hydraulic restoring devices yieldable urge the pistons in each of the hydraulic cylinders to an equilibrium position, thereby restoring the length of each landing gear to an equilibrium length following a disturbance. The respective dampers are not suitable to absorb any vertical energy at landing of the helicopter. Stiffness to absorb the vertical energy of the landing is provided by the cross tubes and skids of the landing gear of US 4519559 A. The teaching of US 4519559 A does not address ground resonance problems of helicopters.

The document US3144223 NICHOLS 1962 describes a landing gear structure for a helicopter, having a pair of side shock absorbing portions, on the respective sides of the chassis of the helicopter. Longitudinally, function of each side shock absorbing portion is divided into two independent longitudinal sections, frontwards and backwards. Each section have a strut member. On each side, the two independent longitudinal sections have a common landing surface engaging means of the skid type, defined by an elongated tubular member or skid. Each skid is linked to the chassis by two front / back strut members. On each side, the two independent longitudinal sections also have operatively distinct rod sections which extend in opposite directions from an intermediate reference location at which the rod structure is operatively and non-rotatably secured to the aircraft chassis. In distinction to this non-rotatable, fixed engagement in brackets, outer front / back ends of respective rod sections are free to rotatably twist. Thus depending upon the force or shock imparted by the landing, each strut member will move through a predetermined angle. The shock will be absorbed by the twisting movement of the respective front / back rod sections. The objective of this invention is to avoid or reduce ground resonance problems by means of a helicopter's skid type landing gear.

The solution is provided with a helicopter having a skid type landing gear with the features of claim 1. Preferred embodiments of the invention are presented with the subclaims. A skid type landing gear is claimed in claim 10.

According to the invention, a helicopter with a fuselage comprises a skid-type landing gear mounted to said fuselage. Said skid-type landing gear comprises cross beams with skids being each disposed in an essentially longitudinal direction laterally on a respective side of a longitudinal midplane in elevation of the landing gear. Each of said skids is mounted on one respective side of the longitudinal midplane to a lateral end of at least one of said cross beams. The cross beams are designed as a supporting structure to transfer forces and moments between skids and fuselage. Each of the cross beams is provided with an inner end next to the fuselage. Fixed bearings and floating bearings of the inventive helicopter skid-type landing gear are provided at the fuselage. Torsion bar springs are provided between said fixed bearings and floating bearings with each of said torsion bar springs being fixed by means of at least one of said fixed bearings whereas said torsion bar springs are allowed to rotate around their longitudinal axis relative to said floating bearings. Said respective inner end of each cross beam is attached to said torsion bar spring at the floating bearing by means of splines in such a manner that forces and moments are transferred from the respective inner end of each cross beam to said torsion bar spring, i. e. the cross beam becomes a pivotable cantilever cross beam as the cross beam may rotate (pivot) with the torsion bar spring it is mounted to relative to the floating bearing while transferring all its forces and bending moments into the torsion bar spring. All of the transversal or any longitudinal forces from the torsion bar spring are supported in the floating bearing. The fixed bearing withstands all moments from the torsion bar spring. At least one discrete damper is provided for any of said pivotable cantilever cross beams, said discrete damper being connected with one end to the respective pivotable cantilever cross beam and with another end to the fuselage. The inventive helicopter skid-type landing gear provides remedy to ground resonance problems by discrete means for elastic deformations of the landing gear and for the damping while fulfilling among others the regulations FAR/CS-27, FAR/CS-29 concerning energy absorption. The dampers and the torsion bar springs of the inventive helicopter skid-type landing gear are two distinct elements, not automatically aligned. Instead of two cross tubes the inventive helicopter skid-type landing gear is provided with four pivotable cantilever cross beams each supported at the fuselage on respective torsion bar springs. The torsion bar springs are attached at one end to the fuselage structure with a fixed bearing principle for transfer of torsion moments from the torsion bar springs into the fuselage structure via the fixed bearings. At their opposed end each of the torsion bar springs are attached to the pivotable cantilever cross beam via a floating bearing principle for transfer of forces into the floating bearing and transfer of torsion moments into the torsion bar springs. The torsion bar springs provide for elastic stiffness of the inventive helicopter skid-type landing gear to absorb vertical energy at landing of the helicopter together with contributions to said elastic stiffness from the cross tubes and the skids. The discrete dampers connected with one end to the pivotable cantilever cross beams and with their opposed end to the fuselage structure allow controlled damping of the inventive helicopter skid-type landing gear and the discrete dampers provide velocity dependant energy dissipation to absorb vertical kinetic energy at landing of the helicopter. The forces acting at landing of the inventive helicopter are split in two force components: one component is fully reversible and acts as torsion moment at the torsion bar springs and the second component are forces to the damping. The invention allows controlled energy absorption during landing and controllable and tunable stiffness- and damping behaviour of the inventive helicopter skid-type landing gear to avoid ground resonance. Another advantage of the invention is to allow elastic energy absorption instead of plastic energy absorption, thus avoiding or reducing a regular exchange of conventional cross tubes after hard landings being especially an advantage for skid type helicopters operating on ship decks as usually the cross tubes of skid type landing gears of helicopters operating on ships need to be replaced quite often as they reach soon their limits in setting. The total weight of the inventive skid-type landing gears is in the same order of magnitude as the weight of current skid-type landing gears. The discrete dampers and torsion bar springs of the inventive skid-type landing gears can be easily replaced in case of damage.

According to a preferred embodiment of the invention the pivotable cantilever cross beams are connected to one end of the torsional bar spring mounted in a floating bearing.

According to a further preferred embodiment of the invention said pivotable cantilever cross beams on either side of the fuselage are symmetric with respect to the midplane.

According to a further preferred embodiment of the invention the discrete dampers are provided with separate means for attachment to the pivotable cantilever cross beams and to the fuselage.

According to a further preferred embodiment of the invention up to four (4) pivoted cantilever cross beams are attached to two torsion bar springs in combination with four (4) dampers to absorb required energies elastically/reversibly.

According to further preferred embodiments of the invention the at least one discrete damper is of the tunable and/or self-regulating liquid-type. The combination of elastic torsion bar springs with discrete dampers of the inventive skid-type landing gears allow precise fine tuning of said energy absorption with said discrete means whereas with the designs of skid type landing gears of the state of the art it is a matter of experience/analysis and trial and error to find the correct stiffness and damping to avoid ground resonance under all possible landing attitudes.

According to a further preferred embodiment of the invention two pivotable cantilever cross beams are attached to two torsion bar springs in combination with two dampers on either side of the fuselage preferably symmetric with respect to the midplane of the helicopter.

Preferred embodiments of the invention are shown with reference to the following description and drawings.
Fig. 1 shows an isometric view from outside of one side of a helicopter's skid type landing gear according to the invention,
Fig. 2 shows a detail of Fig. 1,
Fig. 3 shows a different view of Fig. 2, and
Fig. 4 shows an cross sectional view of a floating bearing of the invention, and
Fig. 5 shows a diagram with repartitions of dissipated energies in a helicopter's skid-type landing gear according to the invention.

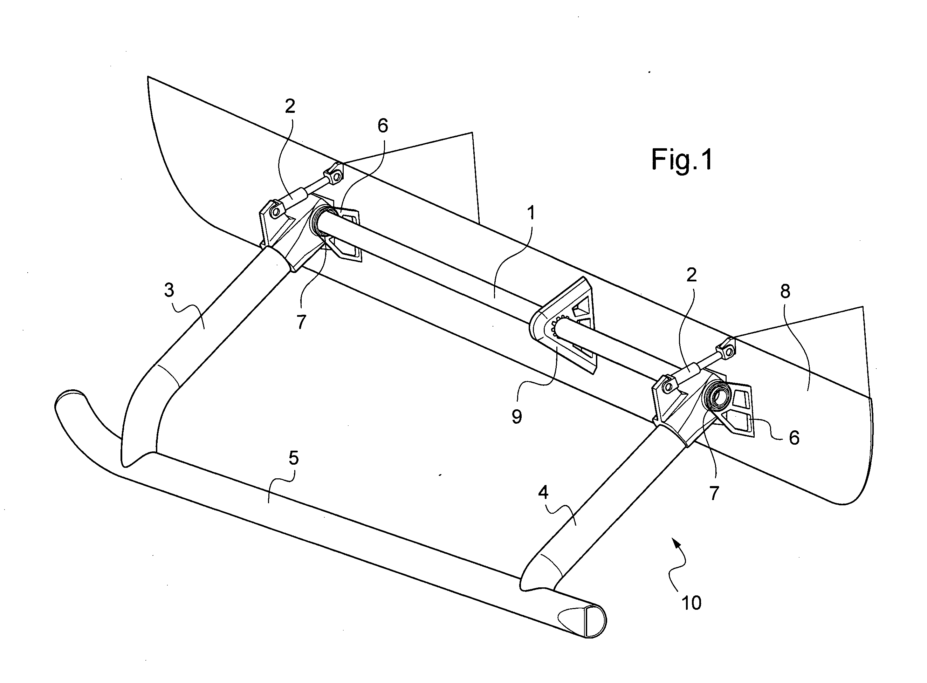

According to Fig. 1 a left side of a helicopter's skid type landing gear 10 comprises two aligned torsion bar springs 1. Each torsion bar spring 1 has two ends. A first end is mounted into a fuselage fitting 6 with an integrated floating bearing 7 for each torsion bar spring 1. A second end of each torsion bar spring 1 is mounted to a fuselage 8 of the helicopter (not shown) by means of a fixed bearing 9. One torsion bar spring 1 going all the way through the fixed bearing 9 to the floating bearings 7 may replace the two aligned torsion bar springs 1. The floating bearings 7 are opposed to each other with respective distances relative to the fixed bearing 9 in between. The torsion bar springs 1 have an essentially cylindrical cross section. The torsion bar springs 1 are made of metal, such as steel.

Two bow shaped pivoting cantilever cross beams 3, 4 are mounted with their respective inner ends to the torsion bar springs 1 by special means, e.g. splines (not shown) at the respective floating bearings 7. The two pivoting cantilever cross beams 3, 4 are attached essentially rectangular at their respective outer lateral ends to a common skid 5 with the pivoting cantilever cross beam 3 being attached next to a forward end of skid 5.

The cross beams 3, 4 are each disposed in an essentially transversal direction relative to a main longitudinal axis of the helicopter (not shown). The skids 5 are mounted laterally, each on a respective side of a longitudinal midplane in elevation of the landing gear 10.

A tunable and/or self-regulating liquid-type damper 2 is mounted with its cylinder side to the forward pivoting cantilever cross beam 3 and with its piston side to the fuselage fitting 6 to absorb energies transferred from the forward pivoting cantilever cross beam 3 and to allow fine tuning with regard to damping to avoid ground resonance. The cantilever cross beam 3 is provided with means, e.g. brackets 11 to attach said discrete damper 2. The orientation of the damper 2 is slightly inclined with regard to a principal direction of the pivoting cantilever cross beam 3.

A further tunable and/or self-regulating liquid-type damper 2 is correspondingly mounted with its cylinder side to the rearward pivoting cantilever cross beam 4 and with its piston side to the fuselage fitting 6.

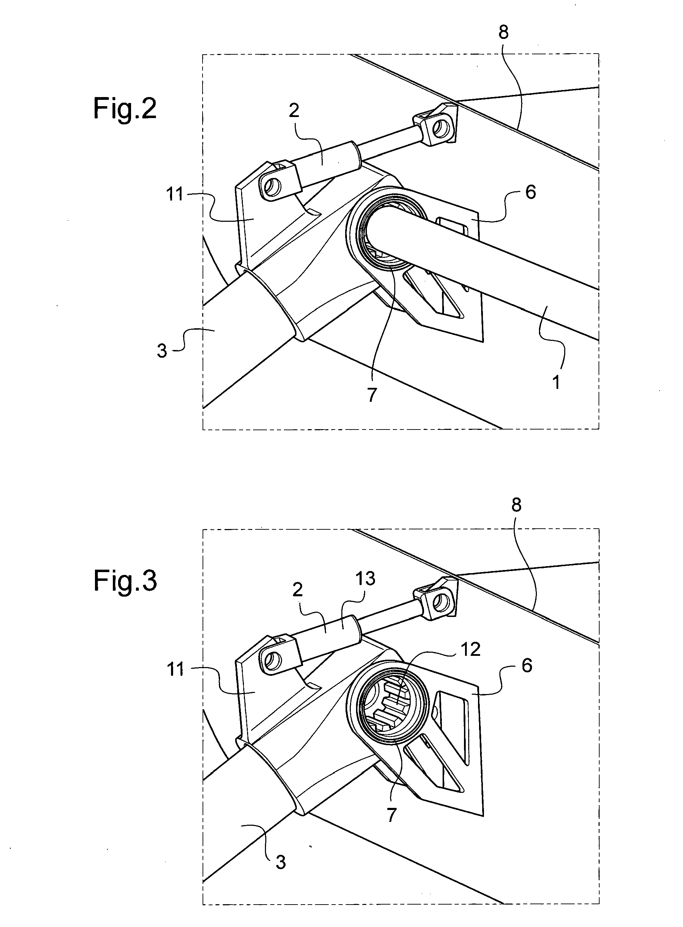

According to Fig. 2 corresponding features are referred to with the references of Fig. 1. The torsion bar spring 1 is mounted into a circular opening with gearing of the floating bearing 7. The forward pivoting cantilever cross beam 3 is mounted to the floating bearing 7. The floating bearing 7 is mounted in the fitting 6 attached to the fuselage 8.

The floating bearing 7 is shown in more detail in Fig. 3. The forward pivoting cantilever cross beam 3 is able to rotate with the gearing 12 of the floating bearing 7 relative to the fitting 6. The damper 2 is driven with its cylinder side 13 by the forward pivoting cantilever cross beam 3 relative to the fuselage fitting 6.

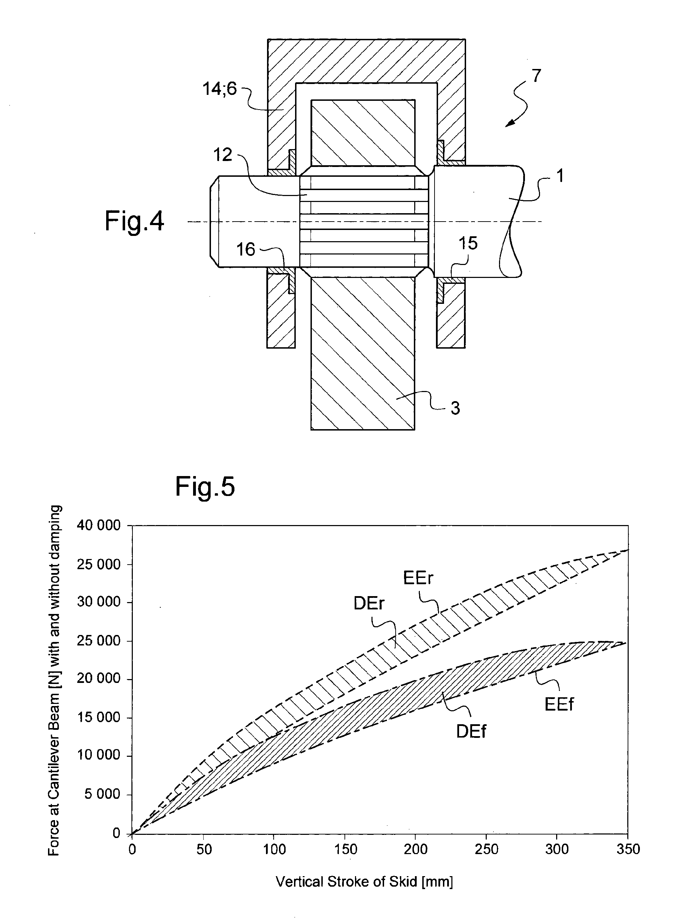

According to Fig. 4 corresponding features are referred to with the references of Fig. 1-3. The floating bearing 7 is mounted inside the fitting 6 with an essentially u-shaped rectangular casing 14. The torsion bar spring 1 is coaxially supported by journal-, taper- or roller bearings 15, 16 mounted into coaxial circular openings of the fitting 6 and the torsion bar spring 1, such that the torsion bar spring 1 is rotatable coaxially with the bearings 15, 16.

The pivoting cantilever cross beam 3 is provided on an inner circumference of its opening with the gearing 12 and the torsion bar spring 1 is on an outer circumference provided with a coaxial gearing that fits with the gearing 12 on the inner circumference of the pivoting cantilever cross beam 3. The torsion bar spring 1 carries the pivoting cantilever cross beam 3 relative to the fitting 6.

According to Fig. 5 there are two curves: a lower one for the energy absorption at the forward cantilever cross beam 3 and an upper one for the energy absorption at the rearward cantilever cross beam 4.

The energy absorption at the forward cantilever cross beam 3 is about 10 000 J for a load of 30-40 kN and a stroke of 300-400 mm at the landing gear 10. The energy absorption at the rearward cantilever cross beam 4 is about 14 000 J for a load of 50-60 kN and a stroke of 300-400 mm at the landing gear 10.

The Young's modulus of the torsion bar spring 1 is from 200 000 N/mm²-220 000 N/mm² at a Poisson's ratio of about 0.3 and a shear modulus of 80 000 N/mm²-81 000 N/mm².

The torsion bar springs 1 are solid with a length between 900-1000 mm and a diameter of 45-48 mm. Hollow torsion bar springs 1 have inner diameters of 40-44 mm and outer diameters of 50-54 mm resulting in moments of inertia between 440 000 mm⁴ and 480 000 mm⁴.

The energies absorbed elastically by the torsion bar springs 1 for the forward cantilever cross beam 3 corresponds to the area below the lower curve EEf. The energies absorbed by the damper 2 for the forward cantilever cross beam 3 corresponds to the shaded area DEf above lower curve EEf.

The energies absorbed elastically by the torsion bar springs 1 for the rearward cantilever cross beam 4 corresponds to the area below the upper curve EEr. The energies absorbed by the damper 2 for the rearward cantilever cross beam 4 would correspond to the shaded area DEr above upper curve EEr, if a damper 2 would be mounted to the rearward cantilever cross beam 4.

The energies absorbed by the dampers 2 are about 5 - 15 % of the energies absorbed by the torsion bar springs 1.

### Reference List

- 1: torsion bar spring
- 2: damper
- 3: cross beam
- 4: cross beam
- 5: skid
- 6: fitting
- 7: floating bearing
- 8: fuselage
- 9: fixed bearing
- 10: landing gear
- 11: brackets
- 12: gearing
- 13: cylinder side
- 14: casing
- 15: bearing
- 16: bearing

## Claims

1. A helicopter with a fuselage (8) and a skid-type landing gear (10) mounted to said fuselage (8), said skid-type landing gear (10) having a pair of common skids (5) and comprising cross beams (3, 4) that are each arranged essentially transversal relative to a longitudinal main axis of the helicopter, each skid (5) of the pair of common skids (5) being mounted to lateral ends of a pair of said cross beams (3, 4),
- at least one of the cross beams (3, 4) being provided with an inner end next to the fuselage (8),
- at least one discrete damper (2) being provided for said at least one cross beam (3, 4), said discrete damper (2) being connected with one end to said cross beam (3, 4) and with another end to the fuselage (8),
- the at least one cross beam (3, 4) being of a pivotable cantilever type, wherein
- at least one fixed bearing (9) and at least one floating bearing (7) are provided on the fuselage (8),
- at least one torsion bar spring (1) is supported by means of said at least one fixed bearing (9) and said at least one floating bearing (7), said respective inner end of said at least one pivotable cantilever cross beam (3, 4) being mounted to said torsion bar spring (1) by means of splines (12) at the floating bearing (7) in such a manner that moments are transferred from the respective inner end of said at least one pivotable cantilever cross beam (3, 4) to said at least one torsion bar spring (1) and said at least one torsion bar spring (1) being mounted to said fixed bearing (9) in such a manner that moments are transferred from said at least one torsion bar spring (1) to said fixed bearing (9),
- the splines (12) being adapted to allow relative axial displacement between said at least one pivotable cantilever cross beam (3, 4) and said torsion bar spring (1) in direction of the longitudinal main axis of the helicopter.

2. The helicopter according to claim 1, **characterized in that** the at least one pivotable cantilever cross beam (3, 4) is connected to one end of the torsion bar spring (1) mounted in the floating bearing (7).

3. The helicopter according to claim 1, **characterized in that** there is at least one pivotable cantilever cross beam (3, 4) on either side of the fuselage (8).

4. The helicopter according to claim 3, **characterized in that** said pivotable cantilever cross beams (3, 4) on either side of the fuselage (8) are symmetric with respect to a midplane of the helicopter.

5. The helicopter according to claim 1, **characterized in that** the at least one discrete damper (2) is provided with separate means (11) for attachment to the at least one pivotable cantilever cross beam (3, 4) and to the fuselage (8).

6. The helicopter according to claim 1, **characterized in that** the at least one discrete damper (2) is of the tunable and/or self-regulating liquid-type.

7. The helicopter according to claim 1, **characterized in that** four pivotable cantilever cross beams (3, 4) are attached to four torsion bar springs (1) in combination with four dampers (2).

8. The helicopter according to claim 1, **characterized in that** the at least one floating bearing (7) comprises journal-, taper- or roller bearings (15, 16).

9. The helicopter according to claim 1, **characterized in that** said at least one pivotable cantilever cross beam (3, 4) comprises an inner gear rim (12) and said torsion bar spring (1) is formed as a pinion in the region of said at least one pivotable cantilever cross beam (3, 4), said inner gear rim (12) and said pinion defining said splines (12).

10. A skid-type landing gear (10) for mounting to a fuselage (8), said skid-type landing gear (10) having a pair of common skids (5) and comprising cross beams (3, 4) that are each arranged essentially transversal relative to a longitudinal extension of an associated skid (5) of said pair of common skids (5), said associated skid (5) being mounted to lateral ends of a pair of said cross beams (3, 4),
- at least one of the cross beams (3, 4) of said pair of said cross beams (3, 4) being provided with an inner end that is spaced apart from said associated skid (5),
- at least one discrete damper (2) being provided for said at least one cross beam (3, 4), said discrete damper (2) being connected with one end to said cross beam (3, 4) and being connectable with another end to the fuselage (8),
- the at least one cross beam (3, 4) being of a pivotable cantilever type, wherein
- at least one torsion bar spring (1) is provided, said respective inner end of said at least one pivotable cantilever cross beam (3, 4) being mounted to said torsion bar spring (1) by means of splines (12) at a floating bearing (7) in such a manner that moments are transferred from the respective inner end of said at least one pivotable cantilever cross beam (3, 4) to said at least one torsion bar spring (1), said floating bearing (7) being adapted for rigid attachment to the fuselage (8), and said at least one torsion bar spring (1) being mounted to a fixed bearing (9) in such a manner that moments are transferred from said at least one torsion bar spring (1) to said fixed bearing (9), said fixed bearing (9) being also adapted for rigid attachment to the fuselage (8),
- the splines (12) being adapted to allow relative axial displacement between said at least one pivotable cantilever cross beam (3, 4) and said torsion bar spring (1) in direction of a longitudinal extension of said torsion bar spring (1).

## Patentansprüche

1. Hubschrauber mit einem Rumpf (8) und einem Landegestell (10) mit Kufen, das an den Rumpf (8) montiert ist, wobei das Landegestell (10) mit Kufen ein Paar üblicher Kufen (5) und Querträger (3, 4) aufweist, die jeweils im Wesentlichen quer zu einer Längshauptachse des Helikopters angeordnet sind, wobei jede Kufe (5) des Paars üblicher Kufen (5) an den seitlichen Enden eines Paars der Querträger (3, 4) montiert ist, wobei
- mindestens einer der Querträger (3, 4) ein dem Rumpf (8) am nächsten liegendes inneres Ende aufweist,
- mindestens ein einzelner Dämpfer (2) für den mindestens einen Querträger (3, 4) vorgesehen ist, wobei der einzelne Dämpfer (2) mit einem Ende mit dem Querträger (3, 4) und mit dem anderen Ende mit dem Rumpf (8) verbunden ist,
- der mindestens eine Querträger (3, 4) vom Typ eines schwenkbaren Auslegers ist,
wobei
- mindestens ein festes Auflager (9) und mindestens ein schwebendes Auflager (7) auf dem Rumpf (8) vorgesehen sind,
- mindestens eine Torsionsstangenfeder (1) von dem mindestens einen festen Auflager (9) und dem mindestens einen schwebenden Lager (7) getragen wird, wobei das jeweilige innere Ende des mindestens einen schwenkbaren Ausleger-Querträgers (3, 4) an der Torsionsstangenfeder (1) mittels einer Vielkeilverzahnung (12) am schwebenden Auflager (7) so montiert ist, dass Drehmomente von dem jeweiligen inneren Ende des mindestens einen schwenkbaren Ausleger-Querträgers (3, 4) auf die mindestens eine Torsionsstangenfeder (1) übertragen werden, und wobei die mindestens eine Torsionsstangenfeder (1) so an dem festen Auflager (9) montiert ist, dass Drehmomente von der mindestens einen Torsionsstangenfeder (1) auf das feste Auflager (9) übertragen werden,
- wobei die Vielkeilverzahnung (12) so ausgebildet ist, dass sie eine relative axiale Verschiebung zwischen dem mindestens einen schwenkbaren Ausleger-Querträger (3, 4) und der Torsionsstangenfeder (1) in Richtung der Längshauptachse des Helikopters erlaubt.

2. Hubschrauber nach Anspruch 1, **dadurch gekennzeichnet, dass** der mindestens eine schwenkbare Ausleger-Querträger (3, 4) mit einem Ende der Torsionsstangenfeder (1) verbunden ist, die in dem schwebenden Auflager (7) montiert ist.

3. Hubschrauber nach Anspruch 1, **dadurch gekennzeichnet, dass** mindestens ein schwenkbarer Ausleger-Querträger (3, 4) auf jeder Seite des Rumpfes (8) vorgesehen ist.

4. Hubschrauber nach Anspruch 3, **dadurch gekennzeichnet, dass** die schwenkbaren Ausleger-Querträger (3, 4) auf beiden Seiten des Rumpfes (8) symmetrisch relativ zu einer Mittelebene des Hubschraubers angeordnet sind.

5. Hubschrauber nach Anspruch 1, **dadurch gekennzeichnet, dass** der mindestens eine einzelne Dämpfer (2) mit getrennten Mitteln (11) zur Befestigung an dem mindestens einen schwenkbaren Ausleger-Querträger (3, 4) und an dem Rumpf (8) versehen ist.

6. Hubschrauber nach Anspruch 1, **dadurch gekennzeichnet, dass** der mindestens eine einzelne Dämpfer (2) vom einstellbaren und/oder selbstregulierenden Flüssigkeitstyp ist.

7. Hubschrauber nach Anspruch 1, **dadurch gekennzeichnet, dass** vier schwenkbare Ausleger-Querträger (3, 4) an vier Torsionsstangenfedern (1) in Kombination mit vier Dämpfern (2) befestigt sind.

8. Hubschrauber nach Anspruch 1, **dadurch gekennzeichnet, dass** das mindestens eine schwebende Auflager (7) Ringlager, Kegellager oder Rollenlager (15, 16) umfasst.

9. Hubschrauber nach Anspruch 1, **dadurch gekennzeichnet, dass** der mindestens eine schwenkbare Ausleger-Querträger (3, 4) einen inneren Zahnkranz (12) aufweist, und die Torsionsstangenfeder (1) in dem Abstand des mindestens einen schwenkbaren Ausleger-Querträgers (3, 4) als ein Ritzel geformt ist, wobei der Innenzahnkranz (12) und das Ritzel die Vielkeilverzahnung (12) bilden.

10. Landegestell (10) mit Kufen zur Montage an einem Rumpf (8), wobei das Landegestell (10) mit Kufen ein Paar üblicher Kufen (5) und Querträger (3, 4) aufweist, die jeweils im Wesentlichen quer zu einer Längserstreckung einer zugehörigen Kufe (5) des Paars üblicher Kufen (5) angeordnet sind, wobei die zugehörige Kufe (5) an den seitlichen Enden eines Paares der Querträger (3, 4) montiert ist, wobei
- mindestens einer der Querträger (3, 4) des Querträgerpaares (3, 4) mit einem inneren Ende versehen ist, das von der zugehörigen Kufe (5) beabstandet ist,
- mindestens ein einzelner Dämpfer (2) für den mindestens einen Querträger (3, 4) vorgesehen ist, wobei der einzelne Dämpfer (2) mit einem Ende mit dem Querträger (3, 4) verbunden ist, und mit dem anderen Ende mit dem Rumpf (8) verbindbar ist,
- der mindestens eine Querträger (3, 4) vom schwenkbaren Auslegertyp ist,
wobei
- mindestens eine Torsionsstangenfeder (1) vorgesehen ist, wobei das jeweilige innere Ende des mindestens einen schwenkbaren Ausleger-Querträgers (3, 4) an der Torsionsstangenfeder (1) über eine Vielkeilverzahnung (12) am schwebenden Auflager (7) so montiert ist, dass Drehmomente von dem jeweiligen inneren Ende des mindestens einen schwenkbaren Ausleger-Querträgers (3, 4) auf die mindestens eine Torsionsstangenfeder (1) übertragen werden, wobei das schwebende Auflager (7) für eine steife Befestigung an dem Rumpf (8) ausgelegt ist, und wobei die mindestens eine Torsionsstangenfeder (1) an einem festen Auflager (9) derart montiert ist, dass Drehmomente von mindestens einer Torsionsstangenfeder (1) auf das feste Auflager (9) übertragen werden, wobei das feste Auflager (9) ebenfalls für eine steife Befestigung an dem Rumpf (8) ausgelegt ist,
- die Vielkeilverzahnung (12) so ausgebildet ist, dass sie eine relative axiale Verschiebung zwischen dem mindestens einen schwenkbaren Ausleger-Querträger (3, 4) und der Torsionsstangenfeder (1) in Richtung der Längserstreckung der Torsionsstangenfeder (1) erlaubt.

## Revendications

1. Hélicoptère avec un fuselage (8) et un train d'atterrissage du type à patins (10) monté sur ledit fuselage (8), ledit train d'atterrissage du type à patins (10) ayant une paire de patins communs (5) et comprenant des traverses (3, 4) qui sont chacune disposée de façon essentiellement transversale par rapport à un axe principal longitudinal de l'hélicoptère, chaque patin (5) de la paire de patins communs (5) étant monté à des extrémités latérales d'une paire desdites traverses (3, 4),
- au moins une des traverses (3, 4) étant pourvue d'une extrémité intérieure à côté du fuselage (8),
- au moins un amortisseur distinct (2) étant prévu pour ladite au moins une traverse (3, 4), ledit amortisseur distinct (2) étant relié avec une extrémité à ladite traverse (3, 4) et avec une autre extrémité au fuselage (8),
- l'au moins une traverse (3, 4) étant du type pivotante en porte à faux,
dans lequel
- au moins un palier fixe (9) et au moins un palier flottant (7) étant prévus sur le fuselage (8),
- au moins un ressort à barre de torsion (1) étant soutenu au moyen dudit au moins un palier fixe (9) et dudit au moins un palier flottant (7), ladite extrémité intérieure respective de ladite au moins une traverse en porte à faux pivotable (3, 4) étant montée sur ledit ressort à barre de torsion (1) au moyen de cannelures (12) au niveau du palier flottant (7) de sorte que les moments sont transférés de l'extrémité intérieure respective de ladite au moins une traverse pivotante en porte à faux (3, 4) audit au moins un ressort à barre de torsion (1) et ledit au moins un ressort à barre de torsion (1) étant monté sur ledit palier fixe (9) de sorte que les moments sont transférés dudit au moins un ressort à barre de torsion (1) audit palier fixe (9),
- les cannelures (12) étant adaptées pour permettre un déplacement axial relatif entre ladite au moins une traverse pivotante en porte à faux (3, 4) et ledit ressort à barre de torsion (1) en direction de l'axe principal longitudinal de l'hélicoptère.

2. Hélicoptère selon la revendication 1, **caractérisé en ce que** l'au moins une traverse pivotante en porte à faux (3, 4) est reliée à une extrémité du ressort à barre de torsion (1) montée dans le palier flottant (7).

3. Hélicoptère selon la revendication 1, **caractérisé en ce qu'**il y a au moins une traverse pivotante en porte à faux (3, 4) de chaque côté du fuselage (8).

4. Hélicoptère selon la revendication 3, **caractérisé en ce que** lesdites traverses pivotantes en porte à faux (3, 4) de chaque côté du fuselage (8) sont symétriques par rapport à un plan médian de l'hélicoptère.

5. Hélicoptère selon la revendication 1, **caractérisé en ce que** l'au moins un amortisseur distinct (2) est pourvu de moyens séparés (11) pour sa fixation à l'au moins une traverse pivotante en porte à faux (3, 4) et au fuselage (8).

6. Hélicoptère selon la revendication 1, **caractérisé en ce que** l'au moins un amortisseur distinct (2) est de type fluidique à réglage et/ou à régulation automatiques.

7. Hélicoptère selon la revendication 1, **caractérisé en ce que** quatre traverses pivotantes en porte à faux (3, 4) sont attachées à quatre ressorts à barre de torsion (1) en combinaison avec quatre amortisseurs (2).

8. Hélicoptère selon la revendication 1, **caractérisé en ce que** l'au moins un palier flottant (7) comprend des paliers lisses, coniques ou à roulement (15, 16).

9. Hélicoptère selon la revendication 1, **caractérisé en ce que** ladite au moins une traverse pivotante en porte à faux (3, 4) comprend une couronne dentée intérieure (12) et ledit ressort à barre de torsion (1) est en forme de pignon dans la zone de ladite au moins une traverse pivotante en porte à faux (3, 4), ladite couronne dentée intérieure (12) et ledit pignon définissant lesdites cannelures (12).

10. Train d'atterrissage du type à patins (10) pour montage sur un fuselage (8), ledit train d'atterrissage du type à patins (10) ayant une paire de patins communs (5) et comprenant des traverses (3, 4) qui sont chacune disposée de façon essentiellement transversale par rapport à un prolongement longitudinal d'un patin associé (5) de ladite paire de patins communs (5), ledit patin associé (5) étant monté aux extrémités latérales d'une paire desdites traverses (3, 4),
- au moins une des traverses (3, 4) de ladite paire desdites traverses (3, 4) étant pourvue d'une extrémité intérieure qui est espacée dudit patin associé (5),
- au moins un amortisseur distinct (2) étant prévu pour ladite au moins une traverse (3, 4), ledit amortisseur distinct (2) étant relié par une extrémité à ladite traverse (3, 4) et pouvant être relié par une autre extrémité au fuselage (8),
- l'au moins une traverse (3, 4) étant du type pivotante en porte à faux,
dans lequel
- au moins un ressort à barre de torsion (1) étant prévu, ladite extrémité intérieure respective de ladite au moins une traverse pivotante en porte à faux (3, 4) étant montée sur ledit ressort à barre de torsion (1) au moyen de cannelures (12) au niveau d'un palier flottant (7) de sorte que les moments sont transférés de l'extrémité intérieure respective de ladite au moins une traverse pivotante en porte à faux (3, 4) audit au moins un ressort à barre de torsion (1), ledit palier flottant (7) étant adapté pour une fixation rigide au fuselage (8), et ledit au moins un ressort à barre de torsion (1) étant monté sur un palier fixe (9) de sorte que les moments sont transférés dudit au moins un ressort à barre de torsion (1) audit palier fixe (9), ledit palier fixe (9) étant aussi adapté pour une fixation rigide au fuselage (8),
- les cannelures (12) étant adaptées pour permettre un déplacement axial relatif entre ladite au moins une traverse pivotante en porte à faux (3, 4) et ledit ressort à barre de torsion (1) en direction d'un prolongement longitudinal dudit ressort à barre de torsion (1).
